**Europäisches Patentamt**

**European Patent Office**

**Office européen des brevets**

(19)

(11) Veröffentlichungsnummer : **0 070 912**
**B1**

(12) **EUROPÄISCHE PATENTSCHRIFT**

(45) Veröffentlichungstag der Patentschrift :
30.01.85

(51) Int. Cl.⁴ : **C 21 C  1/02**

(21) Anmeldenummer : **81105910.4**

(22) Anmeldetag : **27.07.81**

(54) **Verfahren zur Verminderung des Eisengehaltes von bei der Entschwefelung von Roheisen entstehenden CaO-reichen Schlacken.**

(43) Veröffentlichungstag der Anmeldung :
**09.02.83 Patentblatt 83/06**

(45) Bekanntmachung des Hinweises auf die Patenterteilung : **30.01.85 Patentblatt 85/05**

(84) Benannte Vertragsstaaten :
**AT BE DE FR GB IT LU NL SE**

(56) Entgegenhaltungen :
**DE-A- 2 247 475**
**DE-C-  750 334**
**FR-A- 2 348 272**

(73) Patentinhaber : **Thyssen Aktiengesellschaft vorm. August Thyssen-Hütte**
**Kaiser-Wilhelm-Strasse 100**
**D-4100 Duisburg (DE)**

(72) Erfinder : **Hammer, Rudolf, Dr.-Ing.**
**Im Kirchbruch 23**
**D-4220 Dinslaken (DE)**
Erfinder : **Meichsner, Walter, Dipl.-Ing.**
**Kaiserstrasse 52**
**D-4150 Krefeld (DE)**
Erfinder : **Reiermeyer, Heinrich, Dr.-Ing.**
**Am Wesselshof 21**
**D-4100 Duisburg (DE)**

(74) Vertreter : **Patentanwaltsbüro Cohausz & Florack**
**Postfach 14 01 47**
**D-4000 Düsseldorf 1 (DE)**

# Beschreibung

Die Erfindung betrifft ein Verfahren zur Verminderung des Eisengehaltes von bei der Entschwefelung von Roheisen entstehenden CaO-reichen Schlacken.

Seit vielen Jahrzehnten wird Roheisen außerhalb des Hochofens entschwefelt. In früheren Jahren erfolgte dies hauptsächlich durch Zugabe von Soda beim Abstich des Roheisens aus dem Hochofen in die Transportpfannen. In den letzten Jahren hat sich zunehmend die Roheisenentschwefelung nach dem Tauchlanzenverfahren durchgesetzt. Hierbei werden die Entschwefelungsmittel, z. B. Kalziumkarbid oder Kalk, mit Hilfe einer in das Roheisenbad eingetauchten Lanze eingeblasen. Das Einblasen kann in der Pfanne, in der das Roheisen vom Hochofen zum Stahlerzeugungsaggregat transportiert wird, erfolgen.

Die Gesamtkosten der sogenannten externen, d. h. außerhalb des Schmelzaggregats durchgeführten Roheisenentschwefelung werden in erheblichem Maße durch die Eisenverluste während der Entschwefelungsbehandlung erhöht. In der Entschwefelungsschlacke entstehen große Mengen an feinverteilten Eisentröpfchen, die offenbar nicht zu größeren Tropfen koagulieren und daher nicht in das Roheisenbad zurückfließen können, sondern in der Schlacke eingeschlossen bleiben. Hierdurch wird die Wirtschaftlichkeit der Roheisenentschwefelung stark verringert.

Es ist schon vorgeschlagen worden, das Eisen aus der Entschwefelungsschlacke zurückzugewinnen (DE-PS 750 334). Diese Eisenrückgewinnung aus der Entschwefelungsschlacke stellt aber nur einen Notbehelf dar. Das Eisen wird der unmittelbaren Weiterverarbeitung zunächst entzogen und muß nach der Rückgewinnung erneut eingeschmolzen werden.

Die hohen Eisengehalte in hoch CaO-haltiger Entschwefelungsschlacke bei der Verwendung von sodafreien Entschwefelungsmitteln führen auch dazu, daß bei längeren Verweilzeiten zwischen Behandlung der Schmelze und Entleeren der Pfanne die im wesentlichen fest vorliegende Schlacke durch Abkühlung und Erstarrung des in ihr enthaltenen Eisens größere Schollen bildet. Diese Schollen backen an der Pfannenwand an und lassen sich nur schlecht aus der Pfanne entfernen. Dies bewirkt insbesondere bei Torpedopfannen, daß die Schlacke nicht mit dem Roheisen ausfließt und eine unerwünschte Schlackenansammlung in der Pfanne entsteht, die den nutzbaren Pfanneninhalt verringert. Um dies zu vermeiden, sind Verfahren zur Beseitigung von bei der Roheisenentschwefelung in den Transportpfannen entstehenden Schlackenansätzen bekannt geworden (DE-PS 22 47 475). Diese haben sich jedoch nicht bewährt.

Der Erfindung liegt die Aufgabe zugrunde, den Eisengehalt der bei der Entschwefelung von Roheisen entstehenden CaO-reichen Schlacke möglichst gering zu halten. Gleichzeitig sollen Schlackenansätze in dem Entschwefelungsgefäß vermieden werden.

Diese Aufgabe wird erfindungsgemäß dadurch gelöst, daß der Schmelze in der Pfanne eine solche Menge feingemahlener Flußspat zugesetzt wird, daß keine Verflüssigung der Schlacke erfolgt. Je nach Entschwefelungsgrad, Menge und Zusammensetzung der Schlacke liegt die zugesetzte Menge Flußspat bevorzugt im Bereich von 0,05 bis 1,5 kg je Tonne Roheisen. Der Flußspatzusatz wird auf eine Menge begrenzt, bei der keine Verflüssigung der Schlacke erfolgt. Wenn wenig Schlacke bei der Entschwefelung entsteht, liegen die eingesetzten Flußspatmengen an der unteren Grenze bzw. bei Entstehung großer Schlackenmengen sind entsprechend hohe Flußspatzusätze angebracht. Der Zusatz des Flußspats erfolgt bevorzugt durch Einblasen in das Roheisen.

Die Erfindung wird nachstehend anhand eines Ausführungs-beispiels erläutert.

Bei der Entschwefelung einer Roheisenschmelze enthielt die Entschwefelungsschlacke ohne Anwendung des erfindungsgemäßen Verfahrens bei einer Basizitätszahl $CaO : SiO_2$ von 4,3 im Mittel 42,0 % Fe.

Durch Einblasen von 0,25 kg Flußspat/t Roheisen mit einer Korngröße im Bereich bis 0,5 mm konnte bei gleichbleibender Basizitätszahl eine Verringerung des Eisengehaltes auf ca. 10 % ermittelt werden. Gleichzeitig verringerte sich die Schlackenansammlung in der Pfanne, so daß die im Mittel transportierte Roheisenmenge je Fahrt um ca. 10 % gesteigert werden konnte. Der verwendete Flußspat war weitgehend frei von den üblichen Bariumsulfat-Verunreinigungen.

Es war für den Fachmann überraschend, daß die Zugabe von Flußspat in einer Menge unterhalb der für eine Verflüssigung der CaO-reichen Schlacken notwendigen Konzentration zu einer starken Verminderung des Eisengehaltes in der Entschwefelungsschlacke führt. Bei den zugesetzten Mengen wird die Entschwefelungsschlacke sogar noch « trockener », d. h. pulvriger und backt daher bei der Abkühlung nicht zusammen und haftet auch weniger an der Gefäßwand.

## Ansprüche

1. Verfahren zur Verminderung des Eisengehaltes von bei der Entschwefelung von Roheisen entstehenden CaO-reichen Schlacke, dadurch gekennzeichnet, daß der Schmelze in der Pfanne eine solche Menge feingemahlener Flußspat zugesetzt wird, daß keine Verflüssigung der Schlacke erfolgt.

2. Verfahren nach Anspruch 1, dadurch gekennzeichnet, daß der Schmelze Flußspat in einer Menge von 0,05 bis 1,5 kg je Tonne Roheisen zugesetzt wird.

3. Verfahren nach Anspruch 1 oder 2, dadurch gekennzeichnet, daß der Flußspat in das Roheisen eingeblasen wird.

**Claims**

1. Process for reducing the iron content of slags which are rich in CaO and are produced in the desulphurisation of pig iron, characterised in that such a quantity of finely ground fluorspar is added to the melt in the ladle that no liquefaction of the slag occurs.

2. Process according to claim 1, characterised in that a quantity of 0.05 to 1.5 kg of fluorspar per tonne of pig iron is added to the melt.

3. Process according to claim 1 or 2, characterised in that the fluorspar is blown into the pig iron.

**Revendications**

1. Procédé de réduction de la teneur en fer de laitier riche en CaO produit lors de la désulfuration de fonte brute, caractérisé par le fait qu'on ajoute à la masse fondue dans la poche de coulée une quantité telle de fluorine pulvérisée qu'il ne se produit aucune fluidification du laitier.

2. Procédé selon la revendication 1, caractérisé par le fait qu'on ajoute à la masse fondue de la fluorine en quantité de 0,05 à 1,5 kg par tonne de fonte brute.

3. Procédé selon l'une des revendications 1 et 2, caractérisé par le fait qu'on insuffle la fluorine dans la fonte brute.